# EUROPÄISCHE PATENTSCHRIFT

(11) **EP 0 463 214 B1**
(45) Veröffentlichungstag und Bekanntmachung des Hinweises auf die Patenterteilung: **13.09.1995**
(21) Anmeldenummer: 90112266.3
(22) Anmeldetag: 27.06.1990
(51) Int. Cl.: G02B 6/42

(54) **Sende- und Empfangsmodul für eine bidirektionale optische Nachrichten- und Signalübertragung**
Transmitting- and receiving module for a bidirectional optical communication- and signal-transmission
Module d'émission et de réception pour la transmission bidirectionnelle optique de communication et de signal

(43) Veröffentlichungstag der Anmeldung: 02.01.1992
(73) Patentinhaber: SIEMENS AKTIENGESELLSCHAFT, 80333 München (DE)
(72) Erfinder: Althaus, Hans-Ludwig, Dr., D-8417 Lappersdorf (DE); Späth, Werner, Dipl.-Phys., D-8150 Holzkirchen (DE); Hartl, Alfred, D-8411 Kneiting (DE)

(56) Entgegenhaltungen:
- EP-A- 0 250 331
- DE-A- 3 735 138
- GB-A- 2 162 336
- US-A- 4 423 922

## Beschreibung

Die Erfindung betrifft einen Sende- und Empfangsmodul für eine bidirektionale optische Nachrichten- und Signalübertragung nach dem Oberbegriff des Anspruchs 1.

Ein derartiger Sende- und Empfangsmodul geht aus der EP-A-0 238 977 als bekannt hervor. Bei diesem Sende- und Empfangsmodul für ein bidirektionales optisches Kommunikationsnetz sind im wesentlichen zwischen einer Laserdiode und einem Lichtleitfaserende zwei Kugellinsen im Abstand voneinander angeordnet, die das Laserlicht auf das Faserende fokussieren. Zwischen den Kugellinsen ist eine Lichtstrahltrenneinrichtung bzw. ein Strahlteiler angeordnet, der ein vom Faserende in Richtung der senderfernen Linse divergent abgestrahltes und von dieser Linse gebündeltes Licht mit einer von der Wellenlänge des Laserlichtes verschiedenen Wellenlänge von dem Strahlengang trennt und einem Detektor bzw. Lichtempfänger zuleitet. Um die Dejustageempfindlichkeit eines solchen Moduls zu vermeiden, sind die Laserdiode und die dieser naheliegende Linse auf einem gemeinsamen Trägerkörper relativ zueinander dejustagesicher fixiert. Zumindest die Laserdiode bzw. der Lichtsender, die sendernahe Linse, die Lichtstrahltrenneinrichtung (Strahlteiler) und der Lichtempfänger (Detektor) sind in einem Gehäuse aufgenommen, an das ein Ende einer optischen Faser so anschließbar ist, daß dieses Ende in dem relativ zum gemeinsamen Gehäuse ortsfest definierten Fokus des Lichtes der einen Wellenlänge angeordnet ist. Zum Schutz gegen störende Umwelteinflüsse, insbesondere der im Gehäuse untergebrachten aktiven Halbleiterbauteile (Lichtsender und Lichtempfänger) muß das gemeinsame Gehäuse allerdings hermetisch dicht sein.

Aus dem Dokument EP-A-0 250 331 ist außerdem ein Sende- und Empfangsmodul bekannt, bei dem Sender- und Empfängerbauelement sowie die Lichtleitfaser in ein massives Gehäuse eingebaut sind, das zur Strahlführung zylindrische Passagen aufweist, in denen auch die dem jeweiligen Bauelement zugeordnete Linsenkoppeloptik angebracht ist. Allerdings sind diese Opto-Bauelemente nicht hermetisch dicht eingekapselt, so daß diese Abkapselung durch das massive Gehäuse erfolgen muß.
Aus dem Dokument GB-A-2 162 336 ist ein weiteres Sende- und Empfangsmodul bekannt, bei dem der Lichtsender und der Lichtempfänger ein hermetisch dichtes Gehäuse aufweisen. Allerdings sind diese Opto-Bauelemente und die Lichtleitfaser wiederum in ein massives Gehäuse eingebaut, das bei diesem Modul aus einem transparenten Kunststoff bestehen muß.

Der Erfindung liegt die Aufgabe zugrunde, bei einem Sende- und Empfangsmodul der eingangs genannten Art den Aufbau so zu vereinfachen, daß der Herstellaufwand und damit die Herstellungskosten wesentlich reduziert werden, ohne dabei den Schutz der aktiven Halbleiterbauteile zu vernachlässigen.

Diese Aufgabe wird erfindungsgemäß durch einen Sende- und Empfangsmodul mit den Merkmalen des Anspruchs 1 gelöst.

Vorteilhafte Ausgestaltungen bzw. Weiterbildungen der Erfindung sind Gegenstand zusätzlicher Ansprüche.

Die mit der Erfindung erzielten Vorteile bestehen insbesondere darin, daß der Gesamtmodul aus Unterbaugruppen gebildet ist. Diese Unterbaugruppen sind für sich eigenständige Bauelemente und können außerhalb des Gesamtmoduls als hermetisch dichte Sendebauelemente und Empfangsbauelemente vorgeprüft oder auch verwendet werden.

Die eigenständigen elektrooptischen Sende- und Empfangsbauelemente und der Strahlteiler sind so in einem gemeinsamen Gehäuse angeordnet, daß sie gleichzeitig oder hintereinander optische Signale aus einer oder in eine optische Faser, die fest oder lösbar mit dem gemeinsamen Gehäuse verbunden ist, empfangen oder senden können.

Der bidirektionale Modul ist als elektrooptische Sende- und Empfangseinrichtung für die optische Signal- bzw. Nachrichten- oder Datenübertragung über lichtleitende optische Fasern wie Lichtleiter aus Kunststoff oder Glas oder sogenannte Multimode- oder Monomodefasern aus Quarz für die optische Nachrichtentechnik besonders vorteilhaft verwendbar.

Ein wesentlicher Vorteil des erfindungsgemäßen Moduls besteht darin, daß die aktiven Halbleiterbauteile (Lichtsender und Lichtempfänger) hermetisch dicht abgekapselt sind. Hierdurch ist es nicht mehr notwendig, den Gesamtmodul technisch aufwendig hermetisch abzudichten, wie das bei bekannten Anordnungen der Fall ist. Es eröffnen sich vielmehr kostengünstige Möglichkeiten der Faserbefestigung, und zwar sowohl mit dichten als auch mit nicht hermetisch dichten Verbindungsverfahren (Schweißen, Löten, Kleben). Außerdem ergibt sich damit die Möglichkeit, die Lichtleitfaser mit einer offenen Steckerbuchse als Anschlußteil lösbar anzukoppeln.
Die Justage der Subbaugruppen (Sender- und Empfängerbauelement) kann in unterschiedlichen Reihenfolgen durchgeführt werden. Sie kann beispielsweise so erfolgen, daß der Strahlteiler und eine am Faseranschlußteil gegebenenfalls vorgesehene Linse im gemeinsamen Gehäuse eingebaut sind, bevor die übrigen Elemente eingebaut werden.
Die Justage- und Fixierungsabfolge der Sender-, Empfänger- und Faserbaugruppe zur optimalen Licht-Aus- und Einkopplung kann hintereinander oder auch iterativ gemeinsam erfolgen.
Die Fixierung der Baugruppen kann z.B. durch Laserschweißen an das gemeinsame Gehäuse geschehen.

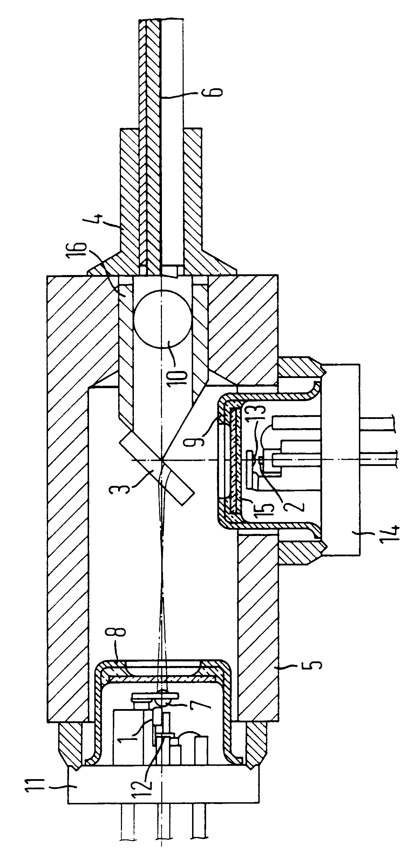

Anhand eines in der Figur der Zeichnung dargestellten Ausführungsbeispiels wird die Erfindung im folgenden näher erläutert.

Der in der Figur dargestellte bidirektionale Sende- und Empfangsmodul besteht im wesentlichen aus einem eine Koppeloptik aufweisenden Lichtsender 1, einem Lichtempfänger 2, einem Anschlußteil 4 für eine gemeinsame Lichtleitfaser 6 und einem im Strahlengang zwischengeordneten Strahlteiler 3, die von einem gemeinsamen Gehäuse 5 umfaßt sind, an das die Lichtleitfaser 6 anschließbar ist. Der Lichtsender 1, eine sogenannte TO-Sendeeinheit, besteht z.B. aus einer Grundplatte 11 mit einer darauf angebrachten Laserdiode 1 und rückseitiger Monitordiode 12 sowie Linse 7 zur Bündelung des Laserstrahls bzw. als Koppeloptik. Die umweltempfindliche Monitor-Laser- Linsen-Anordnung ist hermetisch dicht mit einer Einkapselung vorzugsweise in Form einer Planfensterkappe 8 verschlossen. Die Koppeloptik 7 für den Lichtsender 1, die in diesem bevorzugten Beispiel in Gestalt einer Linse innerhalb der Einkapselung 8 angeordnet ist, kann auch außerhalb der Einkapselung 8 angeordnet sein. Es kann auch zweckmäßig sein, daß die Koppeloptik 7 Teil der Einkapselung 8 ist. Das Planfenster der Kappe 8 ist in einem solchen Fall beispielsweise plan- oder bikonkav ausgebildet. Die Sendeeinheit kann auch anstelle der Laserdiode 1 und Monitordiode 12 nur eine Licht emittierende Diode (LED) besitzen. Die Sendeeinheit stellt in jedem Fall ein eigenständiges Bauelement dar.
Der Lichtempfänger 2 bzw. die Detektoranordnung, eine sogenannte TO-Empfangseinheit, ist auf einer Grundplatte 14 angebracht und hermetisch dicht mit einer Einkapselung vorzugsweise in Form einer Planfensterkappe 9 verschlossen. Das Planfenster der Kappe 9 kann für eine bestimmte Lichtwellenlänge λ als Sperrfilter ausgebildet sein. Es kann aber auch für diese Wellenlänge durchlässig sein und ein zusätzliches Sperrfilter 15 besitzen, das innerhalb oder außerhalb des Planfensters der Kappe 9 fixiert sein kann. In bestimmten Fällen kann das Sperrfilter auch ganz fehlen. Schließlich kann das Planfenster der Kappe 9 bzw. hermetisch dichten Einkapselung auch als Linse ausgebildet sein.
Die Detektoranordnung bzw. der Lichtempfänger 2 kann zweckmäßig mit einer internen Linse 13 als Koppeloptik versehen sein. Die Detektoranordnung kann aber auch ohne eine solche Linse aufgebaut sein und nur aus einer Photodiode bestehen. Eine weitere Alternative für die Detektoranordnung ist die Verwendung einer Photodiode mit Verstärkereinheit oder ein Verstärker mit integrierter Photodiode. Außerdem können in der Detektoranordnung noch weitere elektrische und elektrooptische passive Bauelemente enthalten sein. Die Empfangseinheit stellt in jedem Fall ein eigenständiges, hermetisches Bauelement dar.
Der Strahlteiler 3 bildet eine optische Trenneinrichtung für verschiedene oder gleiche Lichtwellenlängen. Für verschiedene Lichtwellenlängen von Sende- und Empfangszweig, d.h. wenn der Strahlteiler wellenlängenselektiv arbeitet, kann eine Trennung von größer als 95 Prozent erreicht werden. Bei gleicher Wellenlänge kann für die beiden Zweige z.B. eine 50-prozentige oder andere Trennung eingestellt werden.

Zur Ein- oder Auskoppelung des Lichtes aus der gemeinsamen Lichtleitfaser 6 ist in dem in der Figur dargestellten bevorzugten Ausführungsbeispiel als Koppeloptik eine Linse 10 vorgesehen, die in diesem Beispiel als Kugellinse ausgebildet und in einem Trägerteil 16 für den Strahlteiler 3 innerhalb des gemeinsamen Gehäuses 5 angebracht ist. Diese Linse 10 kann bei entsprechender Auslegung der gesamten Koppeloptik allerdings auch wegbleiben.

Die gemeinsame Lichtleitfaser 6 kann sowohl fest als auch lösbar (Steckerbuchse) am Modulgehäuse 5 fixiert sein. Die Fixierung der Baugruppen (Sende- und Empfängereinheit) kann z.B. durch Laserschweißen an das gemeinsame Gehäuse 5 (Modulgehäuse) geschehen.

## Patentansprüche

1. Sende- und Empfangsmodul für eine bidirektionale Nachrichten- und Signalübertragung mit einem, eine Koppeloptik (7) aufweisenden Lichtsender (1), einem Lichtempfänger (2), einem Anschlußteil (4) für eine an Sender und Empfänger optisch gekoppelte Lichtleitfaser (6) und einem im Strahlengang zwischen Sender und Anschlußteil, bzw. Empfänger und Ansclußteil angeordneten Strahlteiler (3), wobei Sender, Empfänger und Strahlteiler von einem gemeinsamen Gehäuse (5) umschlossen sind, an das die Lichtleitfaser anschließbar ist, wobei der Lichtsender und der Lichtempfänger jeweils ein eigenständiges Bauelement bildend von jeweils einer hermetisch dichten Einkapselung (8,9) umgeben und diese eigenständigen Bauelemente mit ihrer Einkapselung in das gemeinsame Gehäuse mit dem Strahlteiler eingefügt sind, **gekennzeichnet durch** eine weitere, aus einer Sammellinse bestehenden Koppeloptik (10) für die Lichtleitfaser (6) und ein Trägerteil (16) welches eine gemeinsame Halterung für die Sammellinse und für den Strahlteiler (3) innerhalb des gemeinsamen Gehäuses (5) darstellt.

2. Modul nach Anspruch 1, **dadurch gekennzeichnet,** daß der Lichtempfänger (2) in seiner Einkapselung (9) mit einer Koppeloptik (13) versehen ist.

3. Modul nach Anspruch 1 oder 2, **dadurch gekennzeichnet,** daß eine Koppeloptik (10) für die Lichtleitfaser (6) vorgesehen ist, die sich vor deren Ende im gemeinsamen Gehäuse (5) befindet.

4. Modul nach einem der Ansprüche 1 bis 3, **dadurch gekennzeichnet,** daß die Lichtleitfaser (6) fest oder lösbar am Anschlußteil (4) fixierbar ist.

5. Modul nach einem der Ansprüche 1 bis 4, **dadurch gekennzeichnet,** daß das Anschlußteil (4) für die gemeinsame Lichtleitfaser (6) als Steckerbuchse ausgebildet ist.

6. Modul nach einem der Ansprüche 1 bis 5, **dadurch gekennzeichnet,** daß der Strahlteiler (3) eine bestimmte Wellenlänge in einem vorgegebenen Verhältnis aufteilt.

7. Modul nach einem der Ansprüche 1 bis 5, **dadurch gekennzeichnet,** daß der Strahlteiler (3) ein wellenlängenselektiver Strahlteiler (3) ist.

8. Modul nach einem der Ansprüche 1 bis 7, **dadurch gekennzeichnet,** daß die Koppeloptik (7) für den Lichtsender (1) innerhalb oder außerhalb dessen Einkapselung (8) angeordnet oder Teil dessen Einkapselung (8) ist.

## Claims

1. Transmitting and receiving module for a bidirectional communication and signal transmission having a light transmitter (1) having coupling optics (7), a light receiver (2), a connection part (4) for an optical fibre (6) coupled optically to the transmitter and receiver, and a beam-splitter (3) arranged in the beam path between transmitter and connection part, or receiver and connection part, respectively, transmitter, receiver and beam-splitter being enclosed by a common housing (5), to which the optical fibre may be connected, the light transmitter and the light receiver, forming in each case an independent component, being surrounded in each case by a hermetically sealed encapsulation (8, 9) and these independent components being inserted with their encapsulation into the common housing having the beam-splitter, characterized by further coupling optics (10), comprising a converging lens, for the optical fibre (6), and a carrier part (16), which represents a common mounting for the converging lens and the beam-splitter (3) within the common housing (5).

2. Module according to Claim 1, characterized in that the light receiver (2) in its encapsulation (9) is provided with coupling optics (13).

3. Module according to Claim 1 or 2, characterized in that coupling optics (10) for the optical fibre (6) are provided, which are located in front of its end in the common housing (5).

4. Module according to one of Claims 1 to 3, characterized in that the optical fibre (6) can be fixed permanently or detachably to the connection part (4).

5. Module according to one of Claims 1 to 4, characterized in that the connection part (4) for the common optical fibre (6) is constructed as a plug-in socket.

6. Module according to one of Claims 1 to 5, characterized in that the beam-splitter (3) subdivides a specific wavelength in a predetermined ratio.

7. Module according to one of Claims 1 to 5, characterized in that the beam-splitter (3) is a wavelength-selective beam-splitter (3).

8. Module according to one of Claims 1 to 7, characterized in that the coupling optics (7) for the light transmitter (1) are arranged inside or outside its encapsulation (8) or are a part of its encapsulation (8).

## Revendications

1. Module d'émission et de réception pour une transmission bidirectionnelle d'informations et de signaux comportant une source de lumière (1) à système optique de couplage (7), un récepteur de lumière (2), une partie de raccordement (4) pour une fibre optique (6), couplée optiquement à la source de lumière et au récepteur, et un séparateur de faisceau (3) disposé dans le trajet du rayonnement entre la source de lumière et la partie de raccordement ou entre le récepteur et la partie de raccordement, la source de lumière, le récepteur et le séparateur de faisceau étant entourés par un boîtier (5) commun, auquel peut être raccordée la fibre optique, et dans lequel la source de lumière et le récepteur de lumière sont entourés chacun par une coiffe hermétiquement étanche (8,9) en formant chacun un composant autonome, et ces composants autonomes pourvus de leur encapsulation sont insérés, conjointement avec le séparateur de faisceau, dans le boîtier commun, caractérisé par un autre système optique de couplage (10) constitué d'une lentille convergente, pour la fibre optique (6), et par une pièce de support (16), qui représente un support commun pour la lentille convergente et pour le séparateur de faisceau (3) à l'intérieur du boîtier commun (5).

2. Module suivant la revendication 1, caractérisé par le fait que le récepteur de lumière (2) comporte, dans sa coiffe (9), un système optique de couplage (13).

3. Module suivant la revendication 1 ou 2, caractérisé par le fait qu'il est prévu, pour la fibre optique (6), un système optique de couplage (10), qui se trouve en avant de l'extrémité de la fibre dans le boîtier commun (5).

4. Module suivant l'une des revendications 1 à 3, caractérisé par le fait que la fibre optique (6) peut être fixée à demeure ou de façon amovible à la partie de raccordement (4).

5. Module suivant l'une des revendications 1 à 4, caractérisé par le fait que la pièce de raccordement (4) est agencée pour la fibre optique commune (6), à la manière d'une douille de connecteur.

6. Module suivant l'une des revendications 1 à 5, caractérisé par le fait que le séparateur de faisceau (3) sépare une longueur d'onde déterminée dans un rapport prédéterminé.

7. Module suivant l'une des revendications 1 à 5, caractérisé en ce que le séparateur de faisceau (3) est un séparateur de faisceau (3) sélectif en fonction des longueurs d'onde.

8. Module suivant l'une des revendications 1 à 7, caractérisé par le fait que le système optique de couplage (7) pour la source de lumière (1) est disposé à l'intérieur ou à l'extérieur de la coiffe (8) hermétique de cette source de lumière ou fait partie de la coiffe (8) de cette source de lumière.
